Europäisches Patentamt

European Patent Office

Office européen des brevets

(11) Veröffentlichungsnummer: **0 445 318 A2**

# (12) EUROPÄISCHE PATENTANMELDUNG

(21) Anmeldenummer: 90104224.2

(22) Anmeldetag: 05.03.90

(51) Int. Cl.⁵: **H04J 3/04**, H04L 7/00

(43) Veröffentlichungstag der Anmeldung:
**11.09.91 Patentblatt 91/37**

(84) Benannte Vertragsstaaten:
**AT CH FR GB IT LI NL SE**

(71) Anmelder: **ANT Nachrichtentechnik GmbH**
**Gerberstrasse 33**
**W-7150 Backnang(DE)**

(72) Erfinder: **Budnik, Norbert, Dipl.-Ing.**
**Im Blütengarten 13**
**W-7150 Backnang(DE)**
Erfinder: **Hofmeister, Hagen, Dipl.-Ing.**
**Fliederstrasse 4**
**W-7091 Schnürpflingen(DE)**
Erfinder: **Tischer, F. Christian, Dipl.-Ing.**
**Kinziger Strasse 9**
**W-7150 Backnang(DE)**

(54) **Verfahren zur Übertragung digitaler Nachrichten im Zeitmultiplex.**

(57) Verfahren zur Übertragung digitaler Nachrichten im Zeitmultiplex, wobei die einzelnen aufeinanderfolgenden Zeitschlitze jeweils verschiedenen Nachrichtenkanälen angehören und wobei zwei Nachrichtenströme mit der gleichen Anzahl an Kanalzeitschlitzen bitweise verkämmt werden, gekennzeichnet durch Übertragung der invertierten Bits des zweiten Nachrichtenstromes. Dadurch wird bei konstanter binär 1-/binär 0-Verteilung ein symmetrisches Ausgangssignal mit hoher Wechselzahl erzeugt, was für die Synchronisation dienlich ist. Einsatz vorteilhaft in Glasfaserbreitbandverteilnetzen zum Multiplexen weniger Kanäle mit hoher Datenübertragungsrate.

EP 0 445 318 A2

## VERFAHREN ZUR ÜBERTRAGUNG DIGITALER NACHRICHTEN IM ZEITMULTIPLEX

Die Erfindung bezieht sich auf ein Verfahren zur Übertragung digitaler Nachrichten im Zeitmultiplex gemäß Oberbegriff des Anspruches 1.

Solche Verfahren sind bekannt. Sie sind beispielsweise für den Einsatz in Glasfaserbreitbandverteilnetzen vorgesehen.

Der vorliegenden Erfindung lag die Aufgabe zugrunde, ein aufwandsarmes Multiplexverfahren für hohe Datenübertragungsraten anzugeben, das auch bei nicht voller Belegung der Eingangskanäle eine gute binär 1-binär 0-Verteilung des Multiplexbitstromes ermöglicht.

Diese Aufgabe wird gelöst durch die Merkmale des Anspruches 1. Vorteilhafte Ausgestaltungen ergeben sich durch die Unteransprüche.

Durch das erfindungsgemäße Verfahren wird ein zusätzlicher Scrambler nach dem Multiplexer auf der Senderseite sowie ein zusätzlicher Desrambler vor dem Demultiplexer der Empfangsseite eingespart. Außerdem würden bei extrem hohen Übertragungsgeschwindigkeiten bei den zusätzlichen Scramblern technologische Probleme auftauchen.

Auch bei nicht voller Belegung der Eingangskanäle erzielt das erfindungsgemäße Verfahren eine gute Binär 1/Binär 0-Verteilung, was für die Synchronisation förderlich ist.

Im folgenden wird die Erfindung anhand der Figuren näher beschrieben.

Die Figur 1 zeigt eine Tabelle für vier Belegungsbeispiele eines Zeitmultiplexrahmens.

Die Figur 2 stellt ein Ausführungsbeispiel für eine Schaltungsanordnung zur Durchführung des erfindungsgemäßen Verfahrens dar.

Figur 3 schließlich gibt vier Zeitdiagramme wieder, ebenfalls für ein angenommenes Belegungsbeispiel.

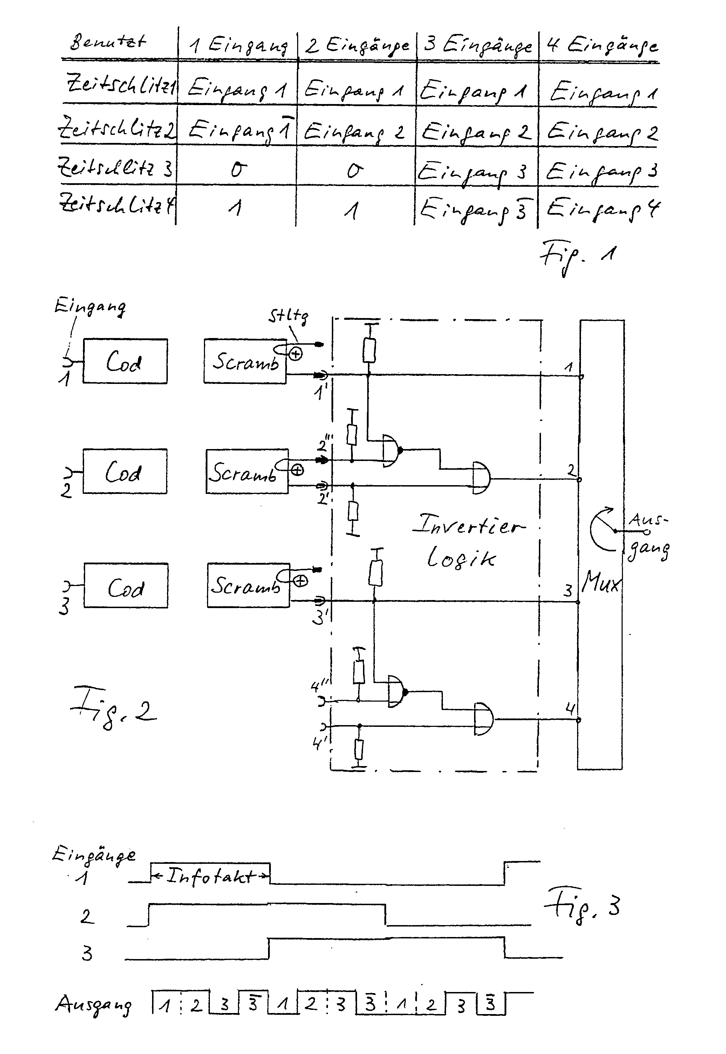

In Figur 1 sind auf der linken Spalte untereinander aufgetragen Zeilen für Zeitschlitz 1,2,3 und 4 für eine Multiplexrahmenlänge von 4. Dabei seien die Zeitschlitze 1 und 3 einem ersten Nachrichtenstrom und die Zeitschlitze 2 und 4 einem zweiten Nachrichtenstrom zugeordnet. In den rechten 4 Spalten sind mögliche Belegungsbeispiele aufgetragen. In der zweiten Spalte ist nur der Kanal 1 belegt; der Zeitschlitz 2 erhält als Signal Kanal 1 invertiert, und die Zeitschlitze 3 und 4 erhalten binär 0 bzw. binär 1. In der dritten, der mittleren Spalte ist angenommen worden, daß die Zeitschlitze 1 und 2 durch reguläre Kanäle 1 und 2 belegt seien. Hier erhält Zeitschlitz 2 das invertierte Signal Eingang $\overline{2}$. Die freien Zeitschlitze 3 und 4 erhalten ebenfalls binär 0 bzw. 1.

In der vierten Spalte wird angenommen, daß die Zeitschlitze 1 bis 3 durch die Kanäle 1 bis 3 belegt seien; hier erhält der freie Zeitschlitz 4 das invertierte Bit des vorangehenden Kanals 3. Zeitschlitz 2 erhält das invertierte Signal Eingang $\overline{2}$.

In der letzten, der fünften Spalte wird angenommen, daß alle Zeitschlitze 1 bis 4 regulär belegt seien mit den Kanälen 1 bis 4. Die Zeitschlitze 2 und 4 erhalten die invertierten Signale Eingang $\overline{2}$ und $\overline{4}$.

Die Figur 2 zeigt die Anordnung eines Multiplexers für vier Eingangskanäle, wobei jedoch gemäß Tabelle Figur 1 zweite Spalte von rechts nur 3 Eingänge belegt sind und die Zeitschlitze 1 und 3 für den ersten Nachrichtenstrom und die Zeitschlitze 2 und 4 für den zweiten Nachrichtenstrom vorgesehen sind. Die Bits des zweiten Nachrichtenstromes werden invertiert. Links von diesem Multiplexer ist eine erfindungsgemäße Invertierlogikschaltung angeordnet mit Eingängen $1'$, $2'$, $3'$ und $4'$. Die Eingänge $1'$, $2'$ und $3'$ sind belegt durch jeweils eine Kaskadenschaltung eines Scramblers, dem ein Codierer vorgeschaltet ist, der wiederum belegt durch jeweils eine Kaskadenschaltung eines Scramblers, dem ein Codierer vorgeschaltet ist, der von den Datenquellen 1, $\overline{2}$ oder 3 gespeist wird. Die Invertierlogikschaltung weist weiterhin einen zweiten und einen vierten Hilfseingang $2''$ und $4''$ auf, in welche Eingänge mittels einer Steuerleitung von dem vorgeschalteten Scrambler signalisiert wird, ob der betreffende Eingang belegt ist. Die Invertierlogik läßt die Scramblerausgänge beim ersten und beim dritten Kanal ungeändert durch; die Eingänge für den Kanal 2 bzw. 4 sind jedoch über ein Oder-Glied geführt. Der zweite Ausgang dieses Oder-Gliedes ist jeweils mit dem Ausgang eines NOR-Gliedes verbunden, dessen einer Eingang mit dem Signalweg des jeweiligen vorangegangenen Kanals also 1 bzw. 3 verbunden ist und dessen anderer Eingang jeweils mit dem Eingang $2''$ bzw. $4''$ für die Steuerleitung eines eventuell vorangeschalteten Scramblers verbunden sind.

Für den dargestellten Fall werden also die Eingangssignale der Datenkanäle 1, $\overline{2}$ und 3 regulär im Multiplex zusammengefaßt, während der Zeitschlitz 4 mit dem invertierten Datensignal des vorangegangenen Kanals 3 beaufschlagt wird.

Die Zeitdiagramme der Figur 4 zeigen die Verschachtelung mit Invertierung, wie sie in der Anordnung nach Figur 2 erfolgt. Die oberste Pulsfolge soll die aktuelle, verscrambelte Information des Kanals 1 und die darunterliegenden Pulsfolgen zwei und drei die entsprechenden der Kanäle $\overline{2}$ und 3 sein. Im untersten Zeitdiagramm ist nun die Pulsfolge zu ersehen, wie sie am Ausgang des Multiplexers ansteht. Eine solche Zeitmultiplexbildung mit Invertierung ist beispielsweise geeignet für 4 x 140 MBit pro Sekunde = 560 MBit pro Sekunde.

**Patentansprüche**

1. Verfahren zur Übertragung digitaler Nachrichten im Zeitmultiplex, wobei die einzelnen aufeinanderfolgenden Zeitschlitze jeweils verschiedenen Nachrichtenkanälen angehören und wobei zwei Nachrichtenströme mit der gleichen Anzahl an Kanälen bzw. Zeitschlitzen durch bitweise Verkämmung so zusammengefaßt werden, daß dem ersten Zeitschlitz des ersten Nachrichtenstromes der erste Zeitschlitz des zweiten Nachrichtenstromes folgt usw.,
dadurch gekennzeichnet,
daß die Bits der einzelnen Zeitschlitze des ersten Nachrichtenstromes nicht invertiert und die Bits der einzelnen Zeitschlitze des zweiten Nachrichtenstromes invertiert übertragen werden.

2. Verfahren nach Anspruch 1, dadurch gekennzeichnet, daß auf der Senderseite einzelne freie Zeitschlitzpositionen mit dem invertierten Bit eines besetzten Zeitschlitzes beaufschlagt werden und zwar so lange, wie sie nicht von Nachrichtenkanälen besetzt sind.

3. Verfahren nach Anspruch 2, dadurch gekennzeichnet, daß mit dem invertierten Bit des vorangehenden Zeitschlitzes beaufschlagt wird.

4. Verfahren nach Anspruch 2, dadurch gekennzeichnet, daß mit dem invertierten Bit des nachfolgenden Zeitschlitzes beaufschlagt wird.

5. Verfahren nach einem der vorhergehenden Ansprüche,
dadurch gekennzeichnet,
daß zwei benachbarte freie Zeitschlitze mit binär 0 bzw. binär 1 beaufschlagt werden und zwar so lange, wie sie nicht von Nachrichtenkanälen besetzt sind.

6. Verfahren nach einem der vorhergehenden Ansprüche,
dadurch gekennzeichnet,
daß die Zeitmultiplexrahmenlänge der beiden Nachrichtenströme relativ klein ist, beispielsweise 4 oder 8.

7. Verfahren nach einem der vorhergehenden Ansprüche,
dadurch gekennzeichnet,
daß die Eingangssignale selbst verscrambelt sind.

| Benutzt | 1 Eingang | 2 Eingänge | 3 Eingänge | 4 Eingänge |
|---|---|---|---|---|
| Zeitschlitz 1 | Eingang 1 | Eingang 1 | Eingang 1 | Eingang 1 |
| Zeitschlitz 2 | Eingang $\overline{1}$ | Eingang 2 | Eingang 2 | Eingang 2 |
| Zeitschlitz 3 | 0 | 0 | Eingang 3 | Eingang 3 |
| Zeitschlitz 4 | 1 | 1 | Eingang $\overline{3}$ | Eingang 4 |

Fig. 1

Fig. 2

Fig. 3